# EUROPÄISCHE PATENTANMELDUNG

(11) **EP 2 472 495 A2**
(43) Veröffentlichungstag der Anmeldung: **04.07.2012**
(21) Anmeldenummer: 11009921.5
(22) Anmeldetag: 16.12.2011
(51) Int. Cl.: G09C 1/00, H04L 9/00

(54) **Verfahren zur gegen elektromagnetische Angriffe (EMA) geschützten Ausführung einer kryptographischen Berechnung**

(30) Priorität: 03.01.2011 DE 102011007976
(71) Anmelder: Giesecke & Devrient GmbH, 81677 München (DE)
(72) Erfinder: Weiss, Dieter, 81825 München (DE); Rankl, Wolfgang, 81825 München (DE)

(57) **Zusammenfassung**

Die Erfindung schafft ein Verfahren zur gesicherten Ausführung einer kryptographischen Berechnung in einem Mikroprozessor mit einem Coprozessor mit einer Steuereinrichtung und einer Mehrzahl von Teilrechenwerken, wobei die Berechnung in Teilberechnungen aufgeteilt wird und die Teilberechnungen auf die Teilrechenwerke verteilt werden. Die Teilrechenwerke sind über eine geeignet gewählte Fläche verteilt angeordnet. Die Teilberechnungen werden über die Fläche verteilt durchgeführt. Hierdurch schwankt die elektromagnetische Abstrahlung an einer festen Position.

## Beschreibung

Die Erfindung betrifft ein Verfahren zur gesicherten Ausführung einer kryptographischen Berechnung in einem Mikroprozessor mit einem Coprozessor mit einer Steuereinrichtung und einer Mehrzahl von Teilrechenwerken, wobei die Berechnung in Teilberechnungen aufgeteilt wird und die Teilberechnungen auf die Teilrechenwerke verteilt werden.

Seitenkanalangriffe auf kryptographische Berechnungen in Mikroprozessoren beruhen darauf, eine physikalische Größe zu messen, deren Wert eine Abhängigkeit von den im Mikroprozessor verarbeiteten Daten hat, beispielsweise den Stromverbrauch oder die elektromagnetische Abstrahlung des Mikroprozessor bei der Ausführung der Berechnung. Auf elektromagnetischer Abstrahlung beruhende Seitenkanalangriffe werden mittels als Antennen wirkender Sonden, an deren Spitze eine Spule angeordnet ist, durchgeführt. Die Sonde erfasst die elektromagnetische Abstrahlung des Mikroprozessors während der Ausführung einer Berechnung. Die Feldstärke des durch die Abstrahlung erzeugten elektromagnetischen Feldes hängt vom Wert der bei der Berechnung verarbeiteten Daten ab. Daher liefert die Messung der Feldstärke der Abstrahlung Rückschlüsse auf den Wert der verarbeiteten Daten. Solche Angriffe werden dadurch erschwert, dass die Sonden ein über die Sondenfläche, d.h. über den Sondenquerschnitt an der Sondenspitze, gemitteltes Abstrahlungssignal erfassen, in dem sich alle innerhalb der Sondenfläche auftretenden Abstrahlungen überlagern, so dass die Analyse eines Einzelsignals schwierig ist.

Mittlerweile existieren Sonden mit einem Spitzendurchmesser von ungefähr 150 µm (Mikrometern) und integriertem Verstärker, mit denen sich elektromagnetische Felder mit hoher Ortsauflösung messen lassen, und mit denen erfolgreiche Angriffe auf Mikroprozessoren zum Ausspähen von Daten über abgestrahlte elektromagnetische Felder durchgeführt wurden.

WO 02/48845 A2 beschreibt einen Mikroprozessor mit einem Coprozessor mit einer Steuereinrichtung und einer Mehrzahl von Teilrechenwerken. Eine kryptographische Berechnung (Operation) wird durch die Steuereinrichtung in Teilberechnungen (Teiloperationen) aufgeteilt und die Teilberechnungen werden durch die Steuereinrichtung auf die Teilrechenwerke verteilt. Durch das Vorsehen mehrerer Teilrechenwerke und die Aufteilung der Berechnung in Teilberechnungen lässt sich die Berechnung beschleunigen, da die Teilrechenwerke ihre Teilberechnungen gleichzeitig ausführen können. Um die Berechnung gegen Seitenkanalangriffe zu schützen, die auf einem Abhorchen des Stromverbrauchs der Berechnung beruhen, ist der gesamte Chip, auf dem der Mikroprozessor einschließlich des Coprozessors angeordnet ist, mit nur einem einzigen Versorgungsstromzugang versehen. Hierdurch vermischen sich am einzigen Versorgungsstromzugang die Stromprofile insbesondere der einzelnen Teilrechenwerke des Coprozessors, wodurch ein Auslesen einzelner Teilrechenwerke anhand ihrer Stromprofile verhindert wird. Das Problem von Seitenkanalangriffen, die auf elektromagnetischer Abstrahlung beruhen, ist in dem Dokument nicht behandelt.

Der Erfindung liegt die Aufgabe zu Grunde, ein Verfahren zur gesicherten Ausführung einer kryptographischen Berechnung in einem Mikroprozessor mit einem Coprozessor mit einer Steuereinrichtung und einer Mehrzahl von Teilrechenwerken, wobei die Berechnung durch die Steuereinrichtung in Teilberechnungen aufgeteilt wird und die Teilberechnungen durch die Steuereinrichtung auf die Teilrechenwerke verteilt werden, zu schaffen, das gegen Seitenkanalangriffe, die auf elektromagnetischer Abstrahlung des Coprozessors basieren, geschützt ist.

Die Aufgabe wird gelöst durch ein Verfahren nach Anspruch 1. Vorteilhafte Ausgestaltungen der Erfindung sind in den abhängigen Ansprüchen angegeben.

Das Verfahren nach Anspruch 1 ist zur gesicherten Ausführung einer kryptographischen Berechnung in einem Mikroprozessor mit einem Coprozessor eingerichtet. Der Coprozessor hat eine Steuereinrichtung und eine Mehrzahl von Teilrechenwerken. Die Berechnung wird durch die Steuereinrichtung in Teilberechnungen aufgeteilt, und die Teilberechnungen werden durch die Steuereinrichtung auf die Teilrechenwerke verteilt. Das Verfahren zeichnet sich dadurch aus, dass die Teilrechenwerke über eine geeignet gewählte Fläche verteilt angeordnet sind, und dass die Teilberechnungen über die Fläche verteilt durchgeführt werden.

Der Coprozessor wird also nicht als zusammenhängende Einheit auf dem Chip realisiert, sondern in mehrere Einzelkomponenten zerlegt und auf dem Chip über eine größere Fläche verteilt angeordnet.

Dies führt dazu, dass die Berechnung an veränderlichen Positionen erfolgt, nämlich stets an der Position desjenigen Teilrechenwerks, das gerade eine Teilberechnung durchführt. Somit ändert sich die Position der Quelle der elektromagnetischen Abstrahlung innerhalb der Fläche zeitlich. Eine an einer beliebigen festgelegten Position angeordnete Sonde zur Erfassung der elektromagnetischen Abstrahlung des Coprozessors erfasst elektromagnetische Abstrahlungs-Signale, die aus unterschiedlichen Entfernungen auf die Sonde einfallen. Da die Feldstärke des durch elektromagnetische Abstrahlung erzeugten Feldes mit steigender Entfernung abnimmt, schwankt die Stärke des an der Sonde erfassten Signals zeitlich ebenso, wie die Entfernung zwischen dem Ort der Teilberechnung und dem Ort der (an festem Ort befindlichen) Sonde zeitlich variiert. Schwankungen des Abstrahlungs-Signals, die auf Schwankungen des Werts verarbeiteter Daten zurückgehen, sind in diesem insgesamt schwankenden Abstrahlungs-Signal nur mehr mit erheblicher Unsicherheit oder gar nicht mehr aufzulösen.

Daher ist gemäß Anspruch 1 ein Verfahren zur gesicherten Ausführung einer kryptographischen Berechnung geschaffen, das gegen Seitenkanalangriffe, die auf elektromagnetischer Abstrahlung des Coprozessors basieren, geschützt ist.

Wahlweise werden die Teilberechnungen in den Teilrechenwerken gleichzeitig, nacheinander oder zeitlich versetzt zueinander ausgeführt oder in einer Kombination der drei Möglichkeiten gleichzeitiger, nacheinanderfolgender und zeitlich versetzter Ausführung. Wahlweise werden die Teilberechnungen in zufällig gewählter Reihenfolge ausgeführt und dabei wahlweise insbesondere nacheinander oder zeitlich versetzt ausgeführt.

Wahlweise sind mindestens ein Teilrechenwerk, vorzugsweise alle Teilrechenwerke, in mindestens zwei Instanzen vorgesehen, die über die Fläche verteilt angeordnet sind, wobei zufallsgesteuert festgelegt ist, durch welche Instanz des Teilrechenwerks die Teilberechnung durchgeführt wird. Durch die redundante Implementierung des jeweiligen Teilrechenwerks mit zwei oder mehr Instanzen und die zufallsgesteuerte Ansteuerung der Instanzen bei der Durchführung der Berechnung wird bewirkt, dass das aus dem Coprozessor abgestrahlte elektromagnetische Feld an einer beliebigen festen Position zusätzlichen zeitlichen Schwankungen unterliegt. Ein Wechsel der Instanz, welche rechnet, kann wahlweise innerhalb einer Berechnung oder alternativ von einer Ausführung der Berechnung zur nächsten erfolgen. Wahlweise sind Datenleitungen zum Austausch von Daten zwischen der Steuereinrichtung, den Teilrechenwerken und ggf. den Instanzen vorgesehen. Die Datenleitungen sind wahlweise in mehreren, mindestens zwei, Datenleitungs-Instanzen vorgesehen, wobei zufallsgesteuert festgelegt ist, welche Datenleitungs-Instanz verwendet wird.

Wahlweise ist die Fläche, über welche die Teilrechenwerke verteilt angeordnet sind, so gewählt, dass ihre Abmessungen in zwei zueinander senkrechte Richtungen jeweils in einem Abmessungsbereich von ungefähr 450 µm bis ungefähr 1500 µm liegt. Die Abmessungen der Fläche sind in diesem Fall so gewählt, dass die Position der Teilberechnung innerhalb der Fläche und somit die Position der Quelle der Abstrahlung im Vergleich mit der Reichweite einer einzelnen, über dem Coprozessor zur Abstrahlungs-Erfassung angeordneten Sonde erheblich schwankt, so dass das durch die Sonde erfasste Signal ebenfalls erheblich schwankt. Andererseits sind die Abmessungen der Fläche ausreichend klein, dass es nicht möglich ist, mehrere Sonden gleichzeitig über dem Coprozessor anzuordnen.

Im Folgenden wird die Erfindung an Hand von Ausführungsbeispielen und unter Bezugnahme auf die Zeichnung näher erläutert, in der zeigt:

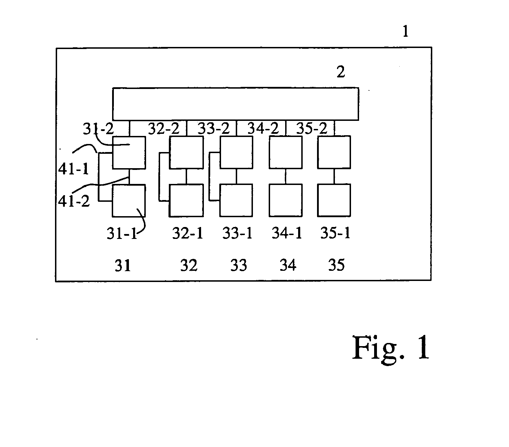

- Fig. 1: einen Coprozessor mit einer Steuereinrichtung und fünf Teilrechenwerken, zur Veranschaulichung des Verfahrens gemäß einer Ausführungsform der Erfindung.

Das Verfahren gemäß einer Ausführungsform der Erfindung soll anhand von Fig. 1 veranschaulicht werden. Fig. 1 zeigt einen einem Mikroprozessor (in Fig. 1 nicht gezeigt) für kryptographische Berechnungen zugeordneten Coprozessor 1, z.B. einen sog. Hardware-Beschleuniger, mit einer Steuereinrichtung 2 und fünf Teilrechenwerken 31, 32, 33, 34 und 35. Jedes der fünf Teilrechenwerke 31, 32, 33, 34, 35 ist in zwei Instanzen x-1, x-2 vorgesehen. D.h. zum Teilrechenwerk 31 sind zwei Instanzen 31-1 und 31-2 vorgesehen, zum Teilrechenwerk 32 sind zwei Instanzen 32-1 und 32-2 vorgesehen, ... und zum Teilrechenwerk 35 sind zwei Instanzen 35-1 und 35-2 vorgesehen. Die beiden Instanzen x-1, x-2 der Teilrechenwerke 31, 32 und 33 sind durch doppelt vorgesehene, zueinander redundante Datenleitungen miteinander verbunden, die Teilrechenwerke 34, 35 sind durch einfache Datenleitungen miteinander verbunden. Für das Teilrechenwerk 31 sind z.B. die beiden Instanzen 31-1 und 31-2 durch zwei zueinander redundante Datenleitungen 41-1 und 41-2 miteinander verbunden.

Eine durch den Coprozessor 1 auszuführende kryptographische Berechnung wird durch die Steuereinrichtung 2 in eine Mehrzahl von Teilberechnungen zerlegt. Die Steuereinrichtung 2 legt fest, in welcher Weise die Teilberechnungen auf die Teilrechenwerke 31-35 und innerhalb der Teilrechenwerke auf die Instanzen 31-1, 31-2, ... 35-1, 35-2 verteilt werden. Dabei werden Teilberechnungen in unterschiedlichen Teilrechenwerken ausgeführt, teilweise nacheinander oder zeitlich versetzt beginnend in zufälliger Reihenfolge ausgeführt, und teilweise gleichzeitig. Die Steuereinrichtung 2 erfasst die Rechenergebnisse der Teilberechnungen und fügt sie koordinierend zusammen, um ein Gesamtergebnis der gesamten Berechnung zu konstruieren.

## Patentansprüche

1. Verfahren zur gesicherten Ausführung einer kryptographischen Berechnung in einem Mikroprozessor mit einem Coprozessor (1) mit einer Steuereinrichtung (2) und einer Mehrzahl von Teilrechenwerken (31-35), wobei die Berechnung in Teilberechnungen aufgeteilt wird und die Teilberechnungen auf die Teilrechenwerke (31-35) verteilt werden,
**dadurch gekennzeichnet, dass**
die Teilrechenwerke (31-35) über eine geeignet gewählte Fläche verteilt angeordnet sind, und dass die Teilberechnungen über die Fläche verteilt durchgeführt werden.

2. Verfahren nach Anspruch 1, wobei die Teilberechnungen in den Teilrechenwerken (31-35) gleichzeitig, nacheinander oder zeitlich versetzt zueinander ausgeführt werden oder in einer Kombination der drei Möglichkeiten gleichzeitiger, nacheinanderfolgender und zeitlich versetzter Ausführung ausgeführt werden.

3. Verfahren nach Anspruch 1 oder 2, wobei die Teilberechnungen in zufällig gewählter Reihenfolge ausgeführt werden.

4. Verfahren nach einem der Ansprüche 1 bis 3, wobei mindestens ein Teilrechenwerk, vorzugsweise alle Teilrechenwerke (31-35) in mindestens zwei Instanzen (31-1, 31-2; ... 35-1, 35-2) vorgesehen sind, die über die Fläche verteilt angeordnet sind, und wobei zufallsgesteuert festgelegt ist, durch welche Instanz (31-1 oder 31-2; ... 35-1 oder 35-2) des Teilrechenwerks (31-35) die Teilberechnung ausgeführt wird.

5. Verfahren nach einem der Ansprüche 1 bis 4, wobei Datenleitungen zum Austausch von Daten zwischen der Steuereinrichtung (2) und/ oder den Teilrechenwerken (31-35) und/ oder ggf. den Instanzen (31-1, 31-2; ... 35-1, 35-2) vorgesehen sind, wobei die Datenleitungen in mehreren, mindestens zwei, Datenleitungs-Instanzen (41-1, 41-2) vorgesehen sind, und wobei zufallsgesteuert festgelegt ist, welche Datenleitungs-Instanz (41-1 oder 41-2) verwendet wird.

6. Verfahren nach einem der Ansprüche 1 bis 5, wobei die Fläche so gewählt ist, dass ihre Abmessungen in zwei zueinander senkrechte Richtungen jeweils in einem Abmessungsbereich von ungefähr 450 µm bis ungefähr 1500 µm liegt.
